# FASCICULE DE BREVET EUROPEEN

(11) **EP 2 582 553 B1**
(45) Date de publication et mention de la délivrance du brevet: **10.09.2014**
(21) Numéro de dépôt: 11735895.2
(22) Date de dépôt: 14.06.2011
(51) Int. Cl.: B60R 21/34, F15B 15/19

(54) **VERIN A COURSE DECLENCHEE MUNI D'UN DISPOSITIF D'EVACUATION DES GAZ**
BETÄTIGER MIT AUSGELÖSTEM HUB MIT EINER GASENTLADUNGSVORRICHTUNG
TRIGGERED-STROKE ACTUATOR PROVIDED WITH A GAS DISCHARGE DEVICE

(30) Priorité: 17.02.2011 FR 1151321; 15.06.2010 FR 1054712
(43) Date de publication de la demande: 24.04.2013
(73) Titulaire: HERAKLES, 33185 Le Haillan (FR)
(72) Inventeur: MARLIN, Frédéric, 33160 Saint Medard en Jalles (FR); NADEAU, Jean-Paul, 33160 Saint Medard en Jalles (FR)
(74) Mandataire: Henrich, Christel
(86) Numéro de dépôt international: PCT/FR2011/051344
(87) Numéro de publication internationale: WO 2011/157940

(56) Documents cités:
- FR-A1- 2 878 212
- FR-A1- 2 928 980

## Description

L'invention se rapporte à un vérin à course déclenchée.

Un vérin à course déclenchée selon la présente invention est particulièrement adapté à un système de sécurité destiné à équiper un véhicule automobile et ayant pour fonction de soulever rapidement le capot du véhicule en cas de collision avec un piéton.

Le brevet FR 2 878 212 décrit un système de sécurité pour la protection d'un piéton lorsque celui-ci est percuté par un véhicule automobile. Ce système comprend un mécanisme permettant de soulever rapidement le capot du véhicule automobile en cas de collision. En effet, lorsqu'une telle collision se produit, la tête du piéton heurte fréquemment le capot du véhicule. Ce choc de la tête sur le capot provoque des déformations du capot. Au-delà d'une certaine déformation, le capot entre en contact avec le bloc moteur et toutes les pièces rigides qui entourent le moteur. C'est à ce moment que la tête du piéton subit la plus forte décélération, pouvant causer de graves blessures. Le système mentionné précédemment est donc conçu pour soulever rapidement le capot d'une certaine hauteur, de manière à éviter que le piéton et notamment sa tête, vienne heurter le bloc moteur après une déformation du capot. Le soulèvement du capot est effectué au niveau de l'arrière de celui-ci, du côté du pare-brise. Le capot reste fixé à l'avant du véhicule automobile.

Ainsi, un tel système de sécurité, s'il est actionné à temps par des moyens de détection appropriés, permet de soulever le capot de quelques dizaines de millimètres en quelques dizaines de millisecondes (100mm et 30 millisecondes sont des valeurs usuelles), c'est-à-dire dans un intervalle de temps très court après la détection d'un choc imminent. L'organe moteur d'un tel système comporte avantageusement un vérin à course déclenchée du type comprenant une charge pyrotechnique, mise à feu électriquement. Les gaz engendrés par la combustion de la charge repoussent le piston du vérin lui-même lié à une tige actionnant le mécanisme de soulèvement du capot.

En cas de non choc, il doit être possible de repositionner le capot dans sa position initiale, sous son propre poids ou avec un effort modéré, au bout d'un certain temps après le déclenchement.

En fin de course et après fonctionnement, les gaz ayant provoqué le déplacement du piston maintiennent une certaine pression dans la chambre d'expansion des gaz du vérin. Cette pression s'accroît significativement si l'on souhaite ramener le vérin dans sa position initiale, par exemple en refermant le capot dans le cas d'un système protège piéton. Pour éviter la recompression dans la chambre d'expansion des gaz, une fuite calibrée doit être pratiquée de façon à évacuer les gaz ayant provoqué le déplacement du piston.

On connaît la demande de brevet EP 0 550 321 qui décrit un vérin pyrotechnique équipé de moyens de passage pour les gaz ayant provoqué le déplacement du piston. Plus particulièrement, le vérin comprend une chambre de combustion communiquant avec une chambre de compression intermédiaire, ainsi qu'une chambre de contre-pression séparée de ladite chambre de compression intermédiaire par un piston. La vitesse de déplacement du piston est contrôlée par l'évacuation partielle des gaz depuis la chambre de compression intermédiaire vers la chambre de contre-pression. Selon une première variante, l'évacuation est réalisée via un conduit externe qui relie la chambre de compression intermédiaire à la chambre de contre-pression. Ce conduit externe complique l'assemblage du vérin et augmente son encombrement. Selon une seconde variante, l'évacuation des gaz est réalisée via une simple rainure réalisée dans la paroi interne du corps, ladite rainure assurant un passage des gaz d'une chambre à l'autre. L'usinage d'une telle rainure est une opération complexe dont la reproductibilité n'est pas assurée. Par ailleurs, quels que soit les moyens de passage prévus pour les gaz contenus dans la chambre de compression intermédiaire, aucun système n'est prévu pour le retour du piston dans sa position initiale après déclenchement.

On connaît également du document FR 2 928 980 un vérin à course déclenchée du type comportant un corps abritant un piston et une tige séparés, des moyens pour propulser le piston en réponse à une commande de déclenchement et un agencement de freinage en retour, dans lequel le piston est traversé de part en part par un orifice de fuite disposé selon son axe. Un tel orifice de fuite est difficile et coûteux à mettre en oeuvre, et ne peut être utilisé que lorsque la tige du piston est dissociée de celui-ci, comme dans l'exemple du document précité.

L'invention a donc pour objectif de fournir un vérin à course déclenchée comportant un piston et une tige et un générateur de gaz destiné à propulser ledit piston en réponse à une commande de déclenchement, et muni d'un mécanisme simple d'évacuation totale ou partielle des gaz contenus dans la chambre d'expansion des gaz afin de permettre un retour arrière du piston et de la tige de ce vérin sous leur propre poids ou avec un effort modéré, après le déclenchement.

Cet objectif est atteint au moyen d'un vérin à course déclenchée comportant un corps abritant un piston et une tige, et un générateur de gaz monté dans ledit corps en regard dudit piston et apte à mettre en pression une première chambre définie entre ledit générateur de gaz et ledit piston, dans lequel le piston comporte, sur sa face externe, une gorge dans laquelle est logé un joint d'étanchéité avec ledit corps, caractérisé en ce qu'un passage calibré, adapté pour évacuer des gaz hors de ladite première chambre, est formé entre le joint d'étanchéité et la paroi de ladite gorge..

Pendant et après fonctionnement du vérin, le passage calibré forme un orifice de fuite pour les gaz contenus dans la première chambre (ou chambre d'expansion des gaz) du vérin. Le vérin selon l'invention autorise donc un retour arrière du piston et de la tige du vérin. Par exemple, si la tige est liée à un mécanisme permettant de soulever le capot d'une automobile en cas de choc frontal avec un piéton, le vérin selon l'invention autorise un retour arrière de la tige en cas de non choc et le repositionnement du capot dans sa position initiale, sous son propre poids ou avec un effort modéré.

Par ailleurs, comme le passage calibré est formé entre le joint d'étanchéité et la ou les parois de la gorge, il peut être mis en place ou formé très facilement lors du montage ou de la fabrication.

Dans toute la présente demande, on définit la gorge comme la cavité dans laquelle est logé le joint destiné à assurer l'étanchéité entre le piston et le corps du vérin. Elle peut être délimitée par une ou plusieurs parois du piston et/ou par des éléments rapportés sur une ou plusieurs parois du piston.

Selon un aspect de l'invention, le passage calibré comprend au moins une rainure formée dans une paroi de la gorge. Dans ce cas, l'invention se rapporte à un vérin à course déclenchée comportant un corps abritant un piston et une tige, et un générateur de gaz monté dans ledit corps en regard dudit piston et apte à mettre en pression une première chambre définie entre ledit générateur de gaz et ledit piston, dans lequel le piston comporte, sur sa face externe, une gorge dans laquelle est logé un joint d'étanchéité avec ledit corps, et caractérisé en ce que le piston comporte au moins une rainure formée dans ladite gorge et configurée pour former un passage calibré pour l'évacuation des gaz hors de ladite première chambre.

Selon un exemple de réalisation, une rainure est formée directement dans le piston. Une telle rainure est très facile et peu couteuse à réaliser. Elle est facilement reproductible, ne nécessite aucun apport de pièces supplémentaires, et n'impose pas d'assemblage particulier.

Selon un autre exemple de réalisation, au moins une partie de paroi de la gorge est formée par une bague fendue. Dans ce cas, la fente de la bague fendue forme une rainure, qui, de la même manière, permet le passage de gaz provenant de la première chambre du vérin, entre la paroi de la gorge et le joint d'étanchéité.

On notera que, de manière connue, la première chambre du vérin (ou chambre d'expansion des gaz) peut être subdivisée en plusieurs chambres intermédiaires au moyen de parois de séparation ouvertes.

Selon un exemple de réalisation, la gorge présente un fond et deux parois latérales s'étendant respectivement depuis une entrée de la gorge jusqu'au fond et depuis le fond jusqu'à une sortie de la gorge, et la rainure comporte un tronçon formé dans le fond de la gorge. Cette configuration permet la circulation des gaz hors de la première chambre du vérin, en formant un passage entre le joint d'étanchéité et le fond de la gorge. Les gaz peuvent ainsi contourner localement, à faible débit, le joint d'étanchéité.

Selon un autre exemple, la rainure comporte en outre un tronçon formé sur au moins l'une des parois latérales de ladite gorge. Dans le cas où la gorge est délimitée au moins en partie par une bague fendue, ladite bague peut par exemple présenter une section transversale de forme générale en L. Cette disposition facilite le passage des gaz hors de la première chambre du vérin, notamment lorsque le taux de compression du joint d'étanchéité à l'intérieur de la gorge est relativement élevé.

On notera que les tronçons de la rainure peuvent être pratiqués dans les parois de la gorge sans nécessairement se rejoindre.

Selon un autre exemple, la rainure s'étend de manière continue sur tout le contour intérieur de la gorge. Cette configuration permet le passage des gaz hors de la première chambre du vérin, même dans les cas où la pression dans la chambre d'expansion n'est pas très élevée et où le taux de compression du joint dans la gorge du piston est très élevé. Dans le cas où la gorge est délimitée au moins en partie par une bague fendue, ladite bague peut par exemple présenter une section transversale en U.

Selon un deuxième aspect de l'invention, la gorge comprend localement au moins une partie en saillie, aux abords de laquelle le joint s'éloigne de la paroi de la gorge. De cette façon, le passage calibré pour les gaz est défini, de part et d'autre de ladite saillie, entre le joint et la paroi adjacente de la gorge.

Dans la présente invention, on entend par partie en saillie toute partie en relief par rapport à une portion de paroi généralement plane ou de révolution de la gorge et pouvant par exemple être formée par le piston lui-même, par exemple par une nervure en fond de gorge et/ou sur l'une de ses parois latérales, ou par un élément quelconque rapporté à l'intérieur de la gorge.

Selon un exemple particulièrement simple à mettre en oeuvre, la partie en saillie est formée par un élément rapporté dans la gorge, par exemple un feuillard métallique.

De préférence, cet élément rapporté comprend au moins une portion adhésive par laquelle il peut adhérer à une paroi de la gorge. Ces dispositions permettent de maintenir l'élément rapporté en place à l'intérieur de la gorge et ainsi de garantir son efficacité dans le temps.

Selon un autre exemple de réalisation, une seconde chambre qui abrite au moins partiellement la tige du vérin, est définie par la surface interne du corps de vérin, du côté du piston opposé à la première chambre (ou chambre d'expansion des gaz). Dans ce cas, le passage calibré est configuré pour laisser fuir les gaz entre la première chambre et cette seconde chambre du vérin.

Selon un exemple, la deuxième chambre du vérin est ouverte vers l'extérieur, avant déclenchement.

Selon un autre exemple, la deuxième chambre est fermée vers l'extérieur, avant déclenchement, et s'ouvre lors du fonctionnement du vérin.

En particulier, la deuxième chambre du vérin peut être isolée de l'extérieur par un moyen d'obturation en contact avec la surface interne du corps de vérin et porté par la tige de sorte que, lors du fonctionnement du vérin, il est déplacé jusqu'à une position dans laquelle la deuxième chambre est ouverte vers l'extérieur. Selon un exemple de réalisation, le moyen d'obturation est solidaire de la tige et positionné relativement à celle-ci de sorte que, lors du fonctionnement du vérin, le moyen d'obturation est déplacé hors dudit corps, ce par quoi la deuxième chambre est ouverte vers l'extérieur.

Lorsque la deuxième chambre est fermée vers l'espace extérieur avant déclenchement, aucune corrosion n'est à craindre pendant toute la période où le vérin n'a pas été déclenché. Le générateur de gaz (et, dans le cas d'un générateur de gaz pyrotechnique, les charges pyrotechniques) sont à l'abri du milieu extérieur. Les éléments métalliques internes du vérin peuvent être réalisés dans des métaux peu coûteux sans nécessiter de traitement anticorrosion particulier. Lorsque la seconde chambre est ouverte vers l'espace extérieur, après fonctionnement, le passage des gaz de la première chambre vers l'extérieur permet la dépressurisation de ladite première chambre au bout d'un certain temps (long par rapport à celui du fonctionnement du vérin), et donc le retour quasi sans effort du vérin dans sa position initiale.

Plusieurs modes ou exemples de réalisation sont décrits dans le présent exposé. Toutefois, sauf précision contraire, les caractéristiques décrites en liaison avec un mode ou un exemple de réalisation quelconque peuvent être appliquées à un autre mode ou exemple de réalisation.

D'autres caractéristiques et avantages de l'invention ressortiront à la lecture de la description suivante d'exemples de réalisation de l'invention donnés à titre illustratif et non limitatif. Cette description fait référence aux feuilles de dessins annexés sur lesquelles :
- la figure 1A montre une vue partiellement en coupe axiale d'un vérin selon un premier mode de réalisation de la présente invention, avant déclenchement ;
- la figure 1B montre le vérin de la figure 1A, après déclenchement ;
- la figure 2 est une vue partielle, en coupe axiale selon II de la figure 4, du vérin de la figure 1A ;
- la figure 3 est une vue en élévation du piston de la figure 2, selon III;
- la figure 4 est une vue en coupe radiale selon IV-IV de la figure 3;
- la figure 5 est une vue en perspective du piston des figures 2 à 4, montrant la rainure ;
- les figures 6 et 7 illustrent une première variante du premier mode de réalisation de l'invention ;
- les figures 8 et 9 illustrent une seconde variante du premier mode de réalisation de l'invention ;
- les figures 10 à 12 illustrent différentes variantes d'un deuxième mode de réalisation de l'invention ; et
- les figures 13 à 15 illustrent un troisième mode de réalisation de l'invention.

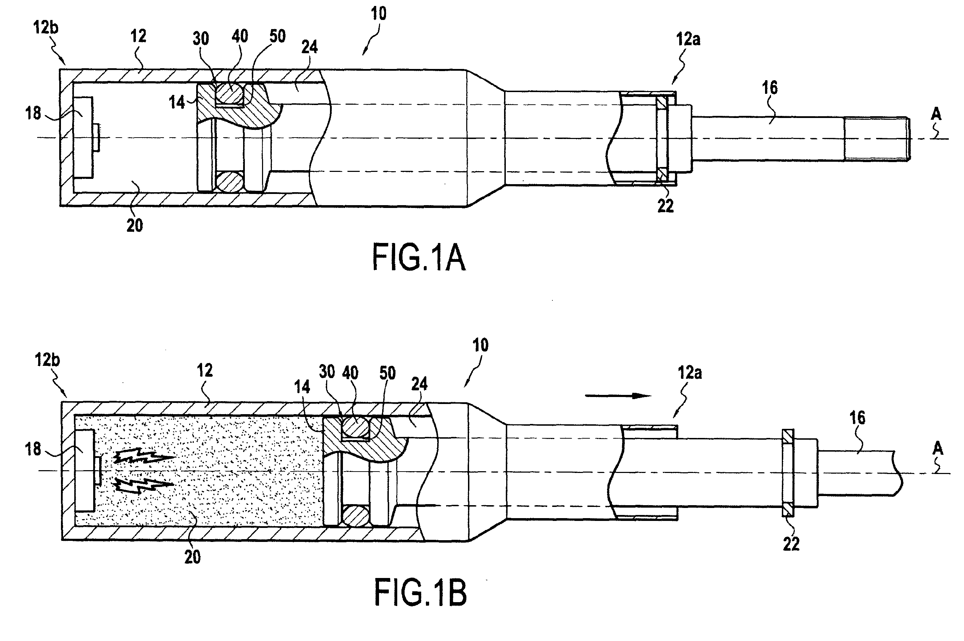

Le vérin à course déclenchée 10 tel que représenté à la figure 1A comporte un corps 12, globalement cylindrique d'axe A, abritant un piston 14 lié à une tige 16 faisant saillie axialement à une extrémité 12a du corps 12. Ce dernier abrite aussi des moyens pour propulser le piston 14 en réponse à une commande de déclenchement. Dans l'exemple représenté, ces moyens sont constitués par un générateur de gaz pyrotechnique 18 monté dans le corps 12 en regard du piston 14. Le générateur de gaz 18 est serti à l'extrémité du corps 12b qui est opposée à celle 12a où la tige 16 fait saillie axialement. Une première chambre du vérin ou chambre d'expansion de gaz 20 est ainsi ménagée entre le générateur de gaz 18 et l'extrémité en regard du piston 14.

Dans la présente demande, sauf précision contraire, une direction radiale est une direction perpendiculaire à l'axe A du vérin 10 et coupant cet axe A. En outre, une direction axiale est une direction parallèle à l'axe A du vérin 10. Les adjectifs axial et radial sont utilisés en référence aux directions axiale et radiale précitées. De même, un plan axial est un plan contenant l'axe A du vérin et un plan radial est un plan perpendiculaire à cet axe. Par ailleurs, dans la présente demande, l'amont et l'aval sont définis par rapport à la direction de déplacement du piston 14 et de la tige 16 à travers le corps 12 du vérin 10 (de l'amont vers l'aval).

Comme mentionné ci-dessus, la tige 16 peut être liée à un mécanisme (non représenté) permettant de soulever le capot d'une automobile en cas de choc frontal avec un piéton.

Comme représenté sur la figure 1, un élément d'étanchéité 22, solidaire de la tige 16, est disposé à l'extrémité 12a du corps 12 où la tige 16 fait saillie vers l'extérieur. Une deuxième chambre 24 du vérin 10, abritant une portion de la tige 16, est ainsi définie entre l'extrémité du piston 14 en regard de la tige 16 et l'élément d'étanchéité 22.

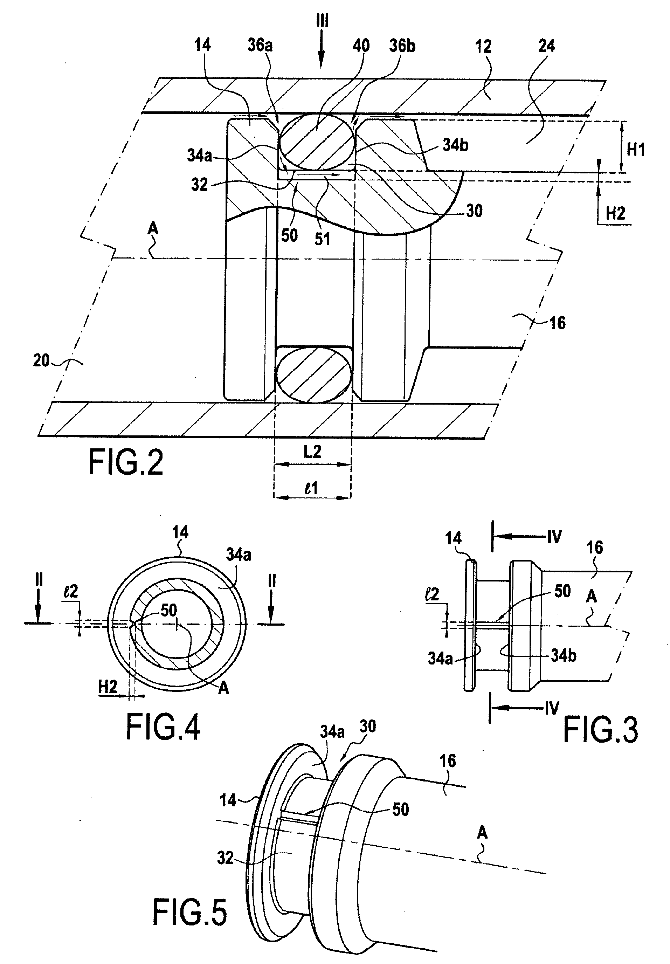

Le piston 14 comporte, à sa périphérie, une gorge annulaire 30 dans laquelle est logé un joint d'étanchéité torique 40. Dans l'exemple, la gorge annulaire 30 présente une section sensiblement rectangulaire dans un plan axial. Comme illustré sur la figure 2, elle comprend un fond 32, une paroi latérale amont 34a définie dans un plan radial et s'étendant depuis une entrée 36a de la gorge 30 (en amont) jusqu'au fond 32, et une paroi latérale aval 34b définie également dans un plan radial et s'étendant depuis le fond 32 jusqu'à la sortie 36b de la gorge 30 (en aval). On définit la largeur l1 de la gorge 30, correspondant à la distance séparant ses parois latérales amont et aval 34a, 34b, et sa profondeur H1, mesurée depuis la face externe du piston 14 jusqu'au fond 32.

La compression du joint 40 dans la direction radiale, entre le fond 32 de la gorge 30 et la face interne du corps de vérin 12 assure l'étanchéité entre le piston 14 et le corps du vérin 12.

Comme représenté plus en détail sur la figure 2, qui illustre un premier mode de réalisation de l'invention, une rainure 50 est pratiquée dans le fond 32 de la gorge 30. Dans l'exemple illustré, la rainure 50 comporte un unique tronçon 51 qui s'étend sur toute la largeur l1 de la gorge 30.

La rainure 50 peut présenter des formes très diverses. Elle est définie par sa longueur L2, sa largeur 12 et sa profondeur H2, qui sont dimensionnées de sorte que le taux de compression du joint n'est modifié que localement.

La rainure 50 peut par exemple être obtenue par poinçonnage. Elle est alors réalisée en appliquant un outil avec une force donnée sur le fond 32 de la gorge 30. La forme de la rainure 50 dépend dans ce cas de la géométrie de l'outil et de la force appliquée. Dans l'exemple illustré, la rainure 50 présente une section transversale (i.e. prise dans un plan radial) en V, comme illustré en détail sur la figure 4.

La rainure 50 peut encore être obtenue par usinage, notamment par fraisage ou moletage.

Dans l'exemple, la rainure 50 est globalement définie dans un plan axial. Selon d'autres variantes de réalisation, la rainure 50 pourra être agencée, dans la gorge 30, de manière différente.

Le fonctionnement du vérin 10 va à présent être décrit plus en détail en référence aux figures 1A et 1B.

Dans l'exemple de la figure 2, le taux de compression du joint 40 à l'intérieur de la gorge 30 est tel que l'étanchéité n'est pas parfaitement assurée entre le joint 40 et les parois latérales 34a, 34b de la gorge 30. Dans les cas où la pression à l'intérieur de la chambre d'expansion des gaz 20 est suffisante, des gaz peuvent donc circuler (comme indiqué par les flèches de la figure 2) entre la paroi latérale amont 34a de la gorge 30 et le joint d'étanchéité 40, et entre le joint d'étanchéité 40 et la paroi latérale aval 34b de la gorge 30. La rainure 50 permet aux gaz provenant de la chambre d'expansion des gaz 20 de contourner le joint d'étanchéité 40 dans le fond de la gorge 30.

La rainure 50 peut présenter des formes et dimensions très diverses selon le débit de fuite souhaité, les dimensions et la forme du joint d'étanchéité 40, son taux de compression et sa dureté. De façon générale, la forme de la rainure 50, sa longueur L2 et sa largeur 12 sont choisies en fonction des dimensions et de la dureté du joint d'étanchéité 40, afin de permettre le passage des gaz de la chambre d'expansion des gaz 20 à la deuxième chambre 24. La profondeur H2 de la rainure 50 est choisie selon le débit de fuite souhaité.

Avant déclenchement du vérin 10, la première et la seconde chambre 20, 24 sont isolées de l'extérieur grâce à l'élément d'étanchéité 22. Par conséquent, même si la rainure 50 forme un passage entre les deux chambres 20, 24 du vérin 10, le vérin 10 est protégé vis-à-vis de l'extérieur, notamment contre la corrosion. Les charges pyrotechniques du générateur de gaz 18 sont ainsi préservées.

Lorsque le vérin 10 est actionné en réponse à une commande de déclenchement (par exemple des capteurs de collision), l'augmentation de pression dans la chambre d'expansion des gaz 20 entraîne le déplacement du piston 14 et de la tige 16, et, de fait, le soulèvement du capot du véhicule. Les dimensions de la rainure 50 sont telles que le débit des gaz passant de la chambre d'expansion des gaz 20 (à gauche du piston sur la figure 1A) vers la seconde chambre 24 du vérin 10 (à droite du piston sur la figure 1A), en passant par la rainure 50, est faible voire très faible par rapport à celui du générateur de gaz 18. Par conséquent, les gaz produits par le générateur de gaz 18 augmentent efficacement la pression dans la chambre d'expansion des gaz 20 et assurent le fonctionnement du vérin 10 tout en fuyant à faible débit dans ladite deuxième chambre 24 pendant et après le fonctionnement du vérin 10.

Comme le montre la figure 1B, l'élément d'étanchéité 22, qui est solidaire de la tige 16 et initialement positionné à l'extrémité 12a du corps de vérin 12, sort du corps de vérin 12 sous l'effet du déplacement de la tige 16. Dès lors, la deuxième chambre 24 du vérin 10 se retrouve ouverte vers l'extérieur.

Lorsque le vérin a par exemple été déclenché par erreur (absence de choc) et doit revenir vers sa position initiale sous l'effet du poids propre du capot du véhicule ou d'un effort modéré appliqué par l'utilisateur, la rainure 50 constitue un orifice de fuite permettant l'évacuation vers l'extérieur des gaz ayant provoqué le déplacement du piston 14 (du fait de l'expulsion de l'élément d'étanchéité 22, voir figure 1B).

Selon un autre exemple de réalisation (non représenté), la deuxième chambre 24 du vérin 10 peut être ouverte vers l'extérieur avant déclenchement du vérin 10. La deuxième chambre 24 est alors définie du côté du piston 14 opposé à la chambre d'expansion des gaz 20, entre la surface interne du corps de vérin 12 et la tige 16. Dans ce cas, l'étanchéité du vérin 10 n'est cependant pas assurée.

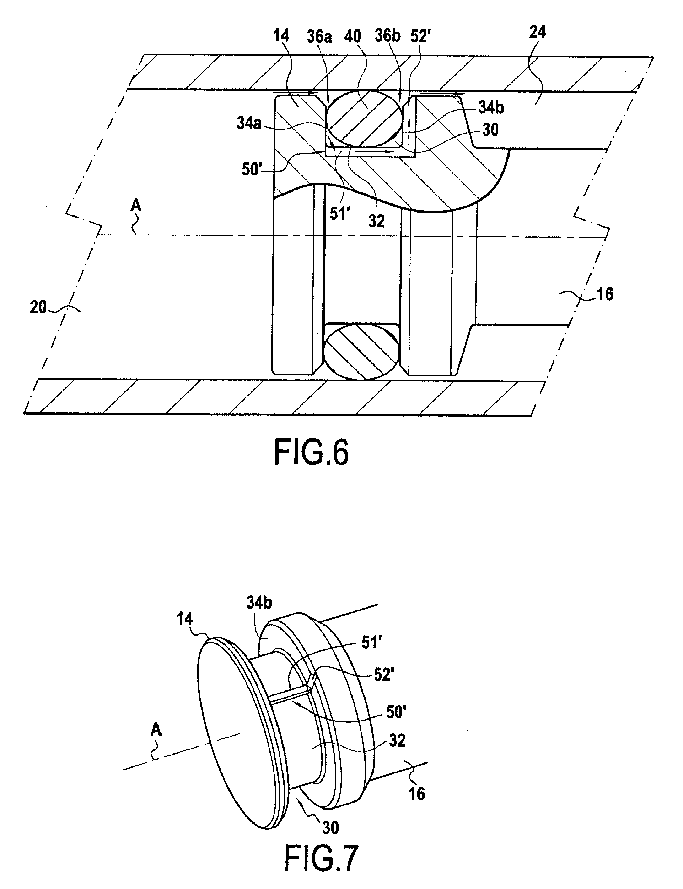

Les figures 6 et 7 illustrent une première variante du premier mode de réalisation de l'invention. Les références numériques correspondant à des éléments communs avec ceux des figures 1 à 5 restent identiques pour la suite de la description.

Selon cette variante, la rainure 50', qui comporte un premier tronçon en fond de gorge 30, est en outre prolongée sur l'une des parois latérales de ladite gorge 30.

Dans l'exemple illustré, la rainure 50' est constituée d'un premier tronçon 51' formé dans le fond 32 de la gorge 30 et s'étendant sur toute la largeur de la gorge, et d'un second tronçon 52' formé dans la paroi latérale aval 34b de la gorge 30, et s'étendant depuis ledit premier tronçon 51' jusqu'à la sortie 36b de la gorge 30. Dans l'exemple, la rainure 50' est définie globalement dans un plan axial.

Selon un autre exemple (non représenté), la rainure 50', qui comporte un premier tronçon en fond de gorge, est prolongée, non plus sur la paroi latérale aval 34b mais sur la paroi latérale amont 34a de la gorge 30. La rainure 50' est alors par exemple constituée d'un premier tronçon 51' formé dans le fond 32 de la gorge 30 et s'étendant sur toute la largeur de la gorge, et d'un second tronçon formé dans la paroi latérale amont 34a de la gorge 30 et s'étendant depuis ledit premier tronçon 51'jusqu'à l'entrée 36a de la gorge 30.

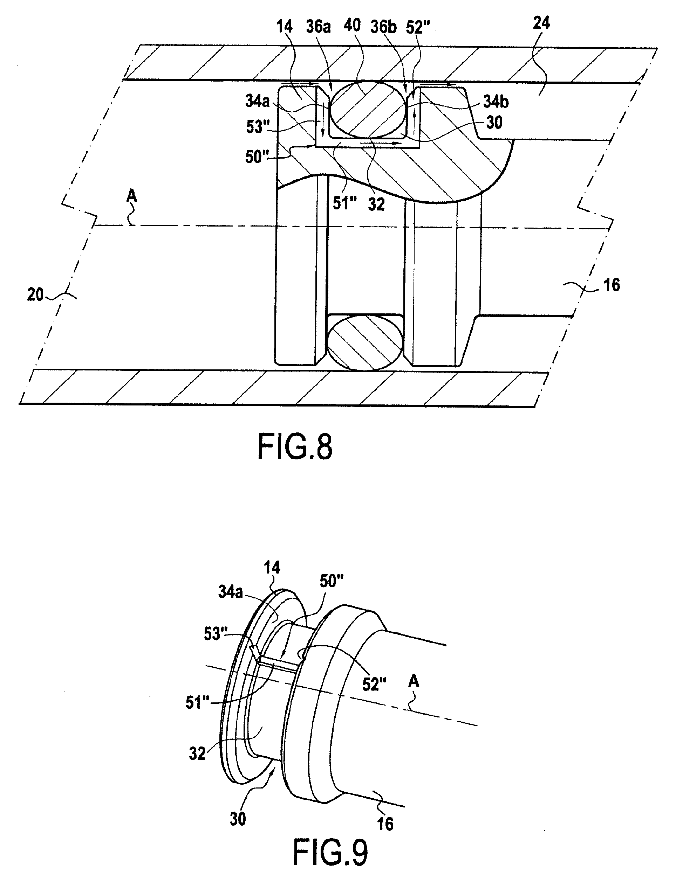

Les figures 8 et 9 illustrent une seconde variante du premier mode de réalisation de l'invention. Les références numériques correspondant à des éléments communs avec ceux des figures 1 à 5 restent identiques pour la suite de la description.

Selon cette variante, la rainure 50" comporte un premier tronçon 53" formé dans la paroi latérale amont 34a de la gorge 30, un second tronçon 51" formé dans le fond 32 de la gorge 30, et un troisième tronçon 52" formé dans la paroi latérale aval 34b de la gorge 30. Dans l'exemple, la rainure 50" s'étend sur l'ensemble du contour de la gorge 30 du piston 14, c'est-à-dire selon une configuration en « U » telle qu'illustrée sur la figure 8. En d'autres termes, le premier tronçon 53" s'étend depuis l'entrée 36a de la gorge jusqu'au fond de gorge 32, le second tronçon 51", qui prolonge le premier tronçon 53", s'étend sur toute la largeur de la gorge 30, et le troisième tronçon 52", qui prolonge le second tronçon 51", s'étend depuis le fond 32 de la gorge 30 jusqu'à la sortie 36b de la gorge 30.

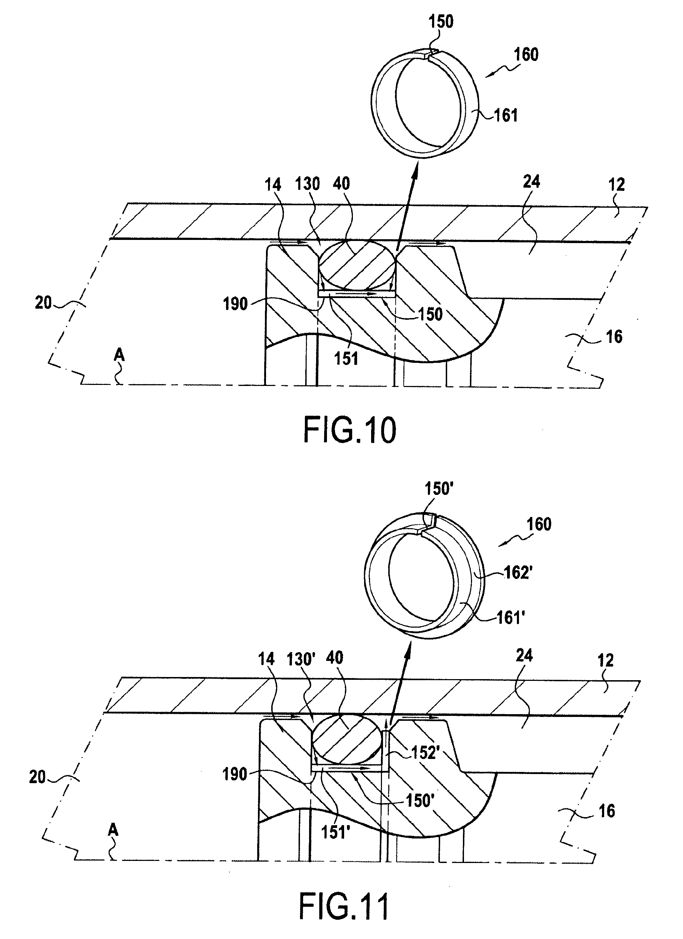

Les figures 10 à 12 illustrent un deuxième mode de réalisation de l'invention. Les références numériques correspondant à des éléments communs avec ceux des figures 1 à 9 restent identiques pour la suite de la description.

Dans ce deuxième mode de réalisation, comme illustré sur la figure 10, une bague 160 (par exemple une bague métallique), présentant une fente 150, est montée dans une cavité périphérique 190 du piston 14.

Une gorge 130, destinée à abriter le joint d'étanchéité 40, est ainsi délimitée par le piston 14 d'une part, et par la bague 160 d'autre part.

Plus précisément, le fond de la gorge 130 est formé par la portion cylindrique 161 de la bague fendue 160 et ses deux parois latérales, par les deux faces en regard de la cavité périphérique 190 du piston 14.

Dans le fond de la gorge 130, la fente 150 de la bague 160 constitue une rainure qui remplit la même fonction que celle, 50, décrite précédemment en liaison avec les figures 1 à 5.

Dans ce deuxième mode de réalisation, la profondeur de la rainure 150 est fonction de l'épaisseur de la bague 160, sa largeur est fonction de la largeur de la fente 150, et sa section transversale, de l'inclinaison ou du tracé des faces sensiblement axiales de la bague 160 qui forment des parois de la fente 150. Ces caractéristiques sont choisies selon le débit de fuite souhaité, les dimensions et la forme du joint d'étanchéité 40, son taux de compression et sa dureté.

Comme indiqué en liaison avec le mode de réalisation précédent, la forme de la rainure 150, sa longueur et sa largeur, sont choisies en fonction des dimensions et de la dureté du joint d'étanchéité 40, afin de permettre le passage des gaz de la chambre d'expansion des gaz 20 à la deuxième chambre 24. La profondeur de la rainure 150 est choisie selon le débit de fuite souhaité.

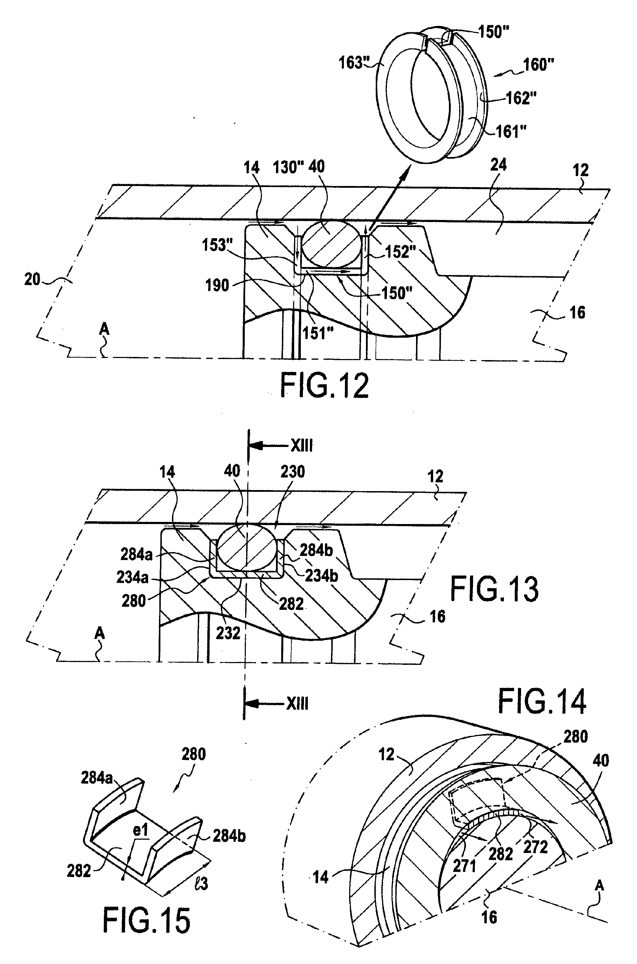

Bien que, dans l'exemple de la figure 10, la bague 160 présente une section transversale rectangulaire, elle peut, selon les cas, présenter une section transversale d'équerre (i.e. en L) ou en U, comme dans les variantes des figures 11 et 12, ou toute autre section adaptée au profil de la cavité circonférentielle 190 du piston 14.

Dans l'exemple de la figure 11, une bague 160', munie d'une fente 150', est montée dans une cavité périphérique 190 du piston 14. Comme la bague 160 décrite précédemment, elle comprend une partie cylindrique 161' adaptée pour être positionnée dans le fond de la cavité périphérique 190.

Elle comprend en outre une partie annulaire 162' s'étendant radicalement vers l'extérieur et destinée, dans l'exemple, à venir en appui contre la face latérale aval de la cavité 190.

Une gorge 130' est ainsi formée, dont la face latérale amont est formée par le piston 14, dont le fond est formé par la partie cylindrique 161' de la bague 160' et dont la face latérale aval est formée par la partie radiale 162' de la bague 160'.

Comme illustré sur la figure 11, la fente 150' constitue une rainure formée d'un premier tronçon 151' en fond de gorge 130' et d'un second tronçon 152' dans la paroi latérale aval de la gorge 130' (c'est-à-dire en aval du joint 40 par rapport au flux de pression des gaz). La rainure 150' remplit ici la même fonction que celle, 50', décrite précédemment en liaison avec les figures 5 et 6.

Selon un autre exemple de réalisation (non représenté), la partie radiale 162' de la bague 160' forme cette fois la face latérale amont de la gorge 130, de sorte que la rainure 150' est positionnée en amont du joint 40 par rapport au flux de pression des gaz.

Dans l'exemple de la figure 12, une bague 160", munie d'une fente 150" et présentant une section transversale en U, est montée dans une cavité circonférentielle 190 du piston 14.

La bague 160" comprend une partie cylindrique 161" adaptée pour être positionnée dans le fond de la cavité périphérique 190, et une première partie 162" s'étendant radialement et destinée à venir en appui contre la face latérale aval de ladite cavité 190. Elle se différencie toutefois de la bague 160' de l'exemple précédent en ce qu'elle comporte en outre une deuxième partie s'étendant radialement 163", destinée ici à venir en appui contre la face latérale amont de la cavité 190.

Une gorge 130" est ainsi formée, dont le fond est formé par la partie cylindrique 161" de la bague 160" et dont les faces latérales amont et aval sont formées respectivement par la seconde partie radiale 163" et la première partie radiale 162" de la bague 160".

La fente 150" forme une rainure comprenant un premier tronçon 151" en fond de gorge, un second tronçon 152" formé dans la paroi latérale aval de la gorge et un troisième tronçon 153" formé dans la paroi latérale amont de la gorge 130".

De préférence, comme dans les exemples illustrés, la partie cylindrique de la bague fendue présente une largeur sensiblement égale à celle de la cavité périphérique 190 du piston 14, et, le cas échéant, sa ou ses parties radiales présentent une hauteur suffisante pour s'étendre depuis le fond jusqu'à l'entrée ou la sortie de ladite cavité. Cependant, on notera que les dimensions des bagues 160, 160', 160" décrites ci-dessus à titre d'exemple ne sont pas limitatives, en particulier la largeur de leur partie cylindrique, ou la hauteur de leur(s) partie(s) annulaire(s) peuvent être modifiées.

Les figures 13 à 15 illustrent un troisième mode de réalisation de l'invention. Les références numériques correspondant à des éléments communs avec ceux des figures 1 à 12 restent identiques pour toute la suite de la description.

Selon ce troisième mode de réalisation, et comme dans les modes de réalisation précédents, une gorge 230 formée à la périphérie du piston 14 est destinée à recevoir un joint d'étanchéité 40. Dans l'exemple considéré sur les figures, la gorge 230 présente un fond 232 et deux parois latérales 234a et 234b.

Comme illustré sur la figure 13, un élément est logé à l'intérieur de la gorge 230, formant une partie en saillie 280 qui diminue localement la section disponible pour le joint d'étanchéité 40 à l'intérieur de cette gorge.

Les dimensions de l'élément rapporté, et en particulier sa largeur 13 (voir la figure 15), sont choisies de sorte que le taux de compression du joint 40 n'est modifié que localement.

Dans l'exemple, l'élément rapporté 280 est un feuillard plié en U pour être adapté à la forme de la gorge 230 et pouvoir y être positionné sous le joint d'étanchéité 40, de sorte que la base 282 du U vient en appui contre le fond 232 de la gorge 230 et que ses ailes 284a et 284b viennent en appui contre les faces latérales amont 234a et aval 234b de la gorge 230.

Comme illustré sur la figure 14, le joint d'étanchéité 40 est déformé progressivement au niveau de l'élément rapporté 280, et pour ainsi dire « soulevé » localement du fond 232 de la gorge 230.

Un espace (respectivement 271, 272), formant passage calibré pour les gaz, est ainsi conservé de part et d'autre de l'élément rapporté 280, entre le joint d'étanchéité 40 et la paroi de la gorge 230.

Dans l'exemple, où le feuillard 280 présente une forme de U, chaque passage 271, 272 comprend un premier tronçon dans le fond 232 de la gorge 230, un second tronçon longeant la face latérale aval 234b de la gorge 230 et un troisième tronçon longeant la face latérale amont 234a de la gorge 230.

On comprend facilement que le débit de fuite des gaz entre la première et la seconde chambre du vérin est, entre autres, fonction de l'épaisseur e1 de l'élément rapporté 280. Plus l'élément rapporté 280 est épais, plus le joint 40 est espacé du fond ou des faces latérales de la gorge 230, et plus les orifices de fuite 171, 172 pour les gaz auront une section importante.

On notera également que selon d'autres exemples de réalisation, l'élément rapporté peut présenter une forme différente d'un U. Par exemple, l'élément rapporté peut présenter une section en L, ou il peut être constitué d'une portion sensiblement plane, destinée à venir se positionner contre la paroi de fond de la gorge.

Pour s'adapter à la courbure du piston 14, la base du feuillard 280 est, de préférence, légèrement concave, comme illustré sur la figure 14.

La pression exercée par le joint torique 40 sur le feuillard 280 contribue à maintenir celui-ci en position à l'intérieur de la gorge 230. Néanmoins, il peut être avantageux que le feuillard 280 soit adhésif sur l'une ou toutes ses faces destinées à venir en contact avec les parois de la gorge. Ceci permet d'assurer son bon positionnement à l'intérieur de la gorge 230 lors du montage et durant toute la vie du vérin.

## Revendications

1. Vérin (10) à course déclenchée comportant un corps (12) abritant un piston (14) et une tige (16), et un générateur de gaz (18) monté dans ledit corps (12) en regard dudit piston (14) et apte à mettre en pression une première chambre (20) définie entre ledit générateur de gaz et ledit piston, dans lequel le piston (14) comporte, sur sa face externe, une gorge (30) dans laquelle est logé un joint d'étanchéité (40) avec ledit corps (12), **caractérisé en ce qu'**un passage calibré (50, 50', 50", 150, 150', 150", 171, 172), adapté pour évacuer des gaz hors de ladite première chambre (20), est formé entre le joint d'étanchéité (40) et la paroi de ladite gorge (30, 130, 130', 130", 230).

2. Vérin selon la revendication 1, **caractérisé en ce que** le passage calibré comprend au moins une rainure (50, 50', 50", 150, 150', 150") formée dans la paroi de la gorge (30, 130, 130', 130").

3. Vérin selon la revendication 2, **caractérisé en ce que** la rainure (50, 50', 50") est formée dans le piston (14).

4. Vérin selon la revendication 2 ou 3, **caractérisé en ce qu'**au moins une partie de paroi de la gorge (130, 130', 130") est formée par une bague fendue (160, 160', 160"), et **en ce que** la rainure (150, 150', 150") est formée par la fente de ladite bague fendue.

5. Vérin selon l'une quelconque des revendications 2 à 4, **caractérisé en ce que** la gorge (30, 130, 130', 130") présente un fond (32) et deux parois latérales (34a, 34b) s'étendant respectivement depuis une entrée (36a) de la gorge (30) jusqu'au fond (32) et depuis le fond (32) jusqu'à une sortie (36b) de la gorge (30) et **en ce que** la rainure comporte un tronçon (51, 51', 51", 151, 151', 151") formé dans le fond (32) de la gorge (30, 130, 130', 130").

6. Vérin selon la revendication 5, **caractérisé en ce que** la rainure comporte en outre un tronçon (52', 52", 53", 152', 152", 153") formé sur au moins l'une des parois latérales (34a, 34b) de ladite gorge.

7. Vérin selon l'une quelconque des revendications 2 à 6, **caractérisé en ce que** la rainure (50", 150") s'étend de manière continue sur tout le contour intérieur de la gorge (30, 130").

8. Vérin selon l'une quelconque des revendications 2 à 7, **caractérisé en ce que** la rainure (50, 50', 50") présente une section transversale en forme de V.

9. Vérin selon la revendication 1, **caractérisé en ce que** la gorge (30) comprend localement au moins une partie en saillie (280), aux abords de laquelle le joint s'éloigne de la paroi de la gorge (230), de sorte que le passage calibré pour des gaz est défini, de part et d'autre de ladite saillie, entre le joint (40) et la paroi adjacente de la gorge (230).

10. Vérin selon la revendication 9, **caractérisé en ce que** la partie en saillie (280) est formée par un élément rapporté dans la gorge (230).

11. Vérin selon la revendication 10, **caractérisé en ce que** l'élément rapporté (280) présente une forme de U adaptée à la section de la gorge (230).

12. Vérin selon la revendication 10 ou 11, **caractérisé en ce que** l'élément rapporté (280) est un feuillard métallique.

13. Vérin selon l'une quelconque des revendications 10 à 12, **caractérisé en ce que** l'élément rapporté (280) comprend au moins une portion adhésive, par laquelle il peut adhérer à une paroi de la gorge (230).

14. Vérin selon l'une quelconque des revendications 1 à 13, **caractérisé en ce qu'**une seconde chambre (24) est définie par la surface interne du corps (12) de vérin, du côté du piston (14) opposé à ladite première chambre (20), et abrite au moins partiellement ladite tige (16), et **en ce que** le passage calibré (50, 50', 50") est configuré pour laisser fuir des gaz entre ladite première chambre (20) et ladite seconde chambre (24).

15. Vérin selon la revendication 14, **caractérisé en ce que**, avant déclenchement, ladite deuxième chambre (24) est ouverte vers l'extérieur.

16. Vérin selon la revendication 14, **caractérisé en ce que**, avant déclenchement, la deuxième chambre (24) est initialement isolée de l'extérieur par un moyen d'obturation (22) en contact avec la surface interne du corps (12) et **en ce que** ledit moyen d'obturation (22) est porté par la tige (16) de sorte que, lors du fonctionnement du vérin (10), il est déplacé jusqu'à une position dans laquelle la deuxième chambre (24) est ouverte vers l'extérieur.

17. Vérin selon l'une quelconque des revendications 1 à 16, **caractérisé en ce que** le générateur de gaz (18) est un générateur de gaz pyrotechnique.

## Patentansprüche

1. Zylinder (10) mit ausgelöstem Hub, umfassend ein Gehäuse (12), das einen Kolben (14) und eine Stange (16) enthält, sowie einen Gasgenerator (18), der in dem Gehäuse (12) gegenüber dem Kolben (14) angebracht und geeignet ist, eine erste Kammer (20), die zwischen dem Gasgenerator und dem Kolben definiert ist, unter Druck zu setzen, wobei der Kolben (14) auf seiner Außenseite eine Auskehlung (30) umfasst, in der eine Dichtung zur Abdichtung (40) mit dem Gehäuse (12) aufgenommen ist, **dadurch gekennzeichnet, dass** ein kalibrierter Durchgang (50, 50', 50", 150, 150', 150", 171, 172), der dazu ausgelegt ist, Gase aus der ersten Kammer (20) abzuführen, zwischen der Dichtung (40) und der Wand der Auskehlung (30, 130, 130', 130", 230) ausgebildet ist.

2. Zylinder nach Anspruch 1, **dadurch gekennzeichnet, dass** der kalibrierte Durchgang wenigstens eine Nut (50, 50', 50", 150, 150', 150"), die in der Wand der Auskehlung (30, 130, 130', 130") ausgebildet ist, umfasst.

3. Zylinder nach Anspruch 2, **dadurch gekennzeichnet, dass** die Nut (50, 50', 50") in dem Kolben (14) ausgebildet ist.

4. Zylinder nach Anspruch 2 oder 3, **dadurch gekennzeichnet, dass** wenigstens ein Wandteil der Auskehlung (130, 130', 130") durch einen Schlitzring (160, 160', 160") gebildet ist und dass die Nut (150, 150', 150") durch den Schlitz des Schlitzrings gebildet ist.

5. Zylinder nach einem der Ansprüche 2 bis 4, **dadurch gekennzeichnet, dass** die Auskehlung (30, 130, 130', 130") einen Boden (32) und zwei Seitenwände (34a, 34b), die sich von einem Eingang (36a) der Auskehlung (30) bis zu dem Boden (32) bzw. von dem Boden (32) bis zu einem Ausgang (36b) der Auskehlung (30) erstrecken, aufweist und dass die Nut einen in dem Boden (32) der Auskehlung (30, 130, 130', 130") ausgebildeten Abschnitt (51, 51', 51", 151, 151', 151") umfasst.

6. Zylinder nach Anspruch 5, **dadurch gekennzeichnet, dass** die Nut ferner einen Abschnitt (52', 52", 53", 152', 152", 153") umfasst, der an wenigstens einer der Seitenwände (34a, 34b) der Auskehlung ausgebildet ist.

7. Zylinder nach einem der Ansprüche 2 bis 6, **dadurch gekennzeichnet, dass** die Nut (50", 150") sich über die gesamte Innenkontur der Auskehlung (30, 130") durchgehend erstreckt.

8. Zylinder nach einem der Ansprüche 2 bis 7, **dadurch gekennzeichnet, dass** die Nut (50, 50', 50") einen V-förmigen Querschnitt aufweist.

9. Zylinder nach Anspruch 1, **dadurch gekennzeichnet, dass** die Auskehlung (30) lokal wenigstens ein vorspringendes Teil (280) umfasst, in dessen Umgebung die Dichtung sich von der Wand der Auskehlung (230) entfernt, so dass der kalibrierte Durchgang für Gase auf beiden Seiten des Vorsprungs zwischen der Dichtung (40) und der benachbarten Wand der Auskehlung (230) definiert ist.

10. Zylinder nach Anspruch 9, **dadurch gekennzeichnet, dass** das vorspringende Teil (280) durch ein in der Auskehlung (230) angesetztes Element gebildet ist.

11. Zylinder nach Anspruch 10, **dadurch gekennzeichnet, dass** das angesetzte Element (280) eine an den Querschnitt der Auskehlung (230) angepasste U-Form aufweist.

12. Zylinder nach Anspruch 10 oder 11, **dadurch gekennzeichnet, dass** das angesetzte Element (280) ein Metallband ist.

13. Zylinder nach einem der Ansprüche 10 bis 12, **dadurch gekennzeichnet, dass** das angesetzte Element (280) wenigstens einen haftenden Abschnitt umfasst, mit dem es an einer Wand der Auskehlung (230) haften kann.

14. Zylinder nach einem der Ansprüche 1 bis 13, **dadurch gekennzeichnet, dass** eine zweite Kammer (24) durch die Innenfläche des Zylindergehäuses (12) auf der Seite des Kolbens (14), die von der ersten Kammer (20) abgewandt ist, definiert ist und die Stange (16) wenigstens teilweise enthält, und dass der kalibrierte Durchgang (50, 50', 50") gestaltet ist, um Gase zwischen der ersten Kammer (20) und der zweiten Kammer (24) entweichen zu lassen.

15. Zylinder nach Anspruch 14, **dadurch gekennzeichnet, dass** vor dem Auslösen die zweite Kammer (24) nach außen offen ist.

16. Zylinder nach Anspruch 14, **dadurch gekennzeichnet, dass** vor dem Auslösen die zweite Kammer (24) anfangs durch ein mit der Innenfläche des Gehäuses (12) in Kontakt befindliches Verschlussmittel (22) von der Außenseite isoliert ist und dass das Verschlussmittel (22) durch die Stange (16) getragen ist, so dass es während des Betriebs des Zylinders (10) bis in eine Position bewegt wird, in der die zweite Kammer (24) nach außen offen ist.

17. Zylinder nach einem der Ansprüche 1 bis 16, **dadurch gekennzeichnet, dass** der Gasgenerator (18) ein pyrotechnischer Gasgenerator ist.

## Claims

1. A triggered-stroke actuator (10) comprising a body (12) housing a piston (14) and a rod (16), and a gas generator (18) mounted in said body (12) opposite said piston (14) and capable of pressurising a first chamber (20) defined between said gas generator and said piston, in which the piston (14) comprises on its external face a groove (30) in which a sealing joint (40) with said body (12) is housed, **characterised in that** a calibrated passage (50, 50', 50", 150, 150', 150", 171, 172) adapted to evacuate gas from said first chamber (20) is formed between the sealing joint (40) and the wall of said groove (30, 130, 130', 130", 230).

2. The actuator according to Claim 1, **characterised in that** the calibrated passage comprises at least one slot (50, 50', 50", 150, 150', 150") formed in the wall of the groove (30, 130, 130', 130").

3. The actuator according to Claim 2, **characterised in that** the slot (50, 50', 50") is formed in the piston (14).

4. The actuator according to Claim 2 or 3, **characterised in that** at least one wall part of the groove (130, 130', 130") is formed by a split ring (160, 160', 160"), and **in that** the slot (150, 150', 150") is formed by the slit of said split ring.

5. The actuator according to any one of Claims 2 to 4, **characterised in that** the groove (30, 130, 130', 130") has a bottom (32) and two lateral walls (34a, 34b) extending respectively from an inlet (36a) of the groove (30) to the bottom (32) and from the bottom (32) to an outlet (36b) of the groove (30) and **in that** the slot comprises a segment (51, 51', 51", 151, 151', 151") formed in the bottom (32) of the groove (30, 130, 130', 130").

6. The actuator according to Claim 5, **characterised in that** the slot also comprises a segment (52', 52", 53", 152', 152", 153") formed on at least one of the lateral walls (34a, 34b) of said groove.

7. The actuator according to any one of Claims 2 to 6, **characterised in that** the slot (50", 150") extends continuously over the entire internal contour of the groove (30, 130").

8. The actuator according to any one of Claims 2 to 7, **characterised in that** the slot (50, 50', 50") has a transversal section in V-shape.

9. The actuator according to Claim 1, **characterised in that** the groove (30) locally comprises at least one protruding part (280), near which the joint moves away from the wall of the groove (230) such that the calibrated passage for gas is defined on both sides of said protrusion between the joint (40) and the wall adjacent to the groove (230).

10. The actuator according to Claim 9, **characterised in that** the protruding part (280) is formed by an attached element in the groove (230).

11. The actuator according to Claim 10, **characterised in that** the attached element (280) has a U-shape adapted to the section of the groove (230).

12. The actuator according to Claim 10 or 11, **characterised in that** the attached element (280) is a metal strip.

13. The actuator according to any one of Claims 10 to 12, **characterised in that** the attached element (280) comprises at least one adhesive portion, by which it can adhere to a wall of the groove (230).

14. The actuator according to any one of Claims 1 to 13, **characterised in that** a second chamber (24) is defined by the internal surface of the actuator body (12) to the side of the piston (14) opposite said first chamber (20) and at least partially houses said rod (16), and **in that** the calibrated passage (50, 50', 50") is configured to let gas escape between said first chamber (20) and said second chamber (24).

15. The actuator according to Claim 14, **characterised in that** prior to triggering said second chamber (24) is open to the exterior.

16. The actuator according to Claim 14, **characterised in that** prior to triggering the second chamber (24) is initially insulated from the exterior by blocking means (22) in contact with the internal surface of the body (12) and **in that** said blocking means (22) are supported by the rod (16) such that during operation of the actuator (10) they are moved into a position in which the second chamber (24) is open to the exterior.

17. The actuator according to any one of Claims 1 to 16, **characterised in that** the gas generator (18) is a pyrotechnic gas generator.
